## Europäisches Patentamt

## European Patent Office

## Office européen des brevets

(11) Publication number: **0 231 557
B1**

# EUROPEAN PATENT SPECIFICATION

(45) Date of publication of the patent specification:
08.03.89

(51) Int. Cl.⁴: **E03C 1/04**

(21) Application number: **86202371.0**

(22) Date of filing: **23.12.86**

(54) **Sanitary single-hole tap.**

(30) Priority: **23.01.86 NL 8600151**

(43) Date of publication of application:
**12.08.87 Bulletin 87/33**

(45) Publication of the grant of the patent:
**08.03.89 Bulletin 89/10**

(84) Designated Contracting States:
**AT BE CH DE FR GB LI NL SE**

(56) References cited:
**EP-A- 0 113 444
DE-A- 2 553 118
FR-A- 2 525 296
US-A- 1 877 665
US-A- 3 508 593**

(73) Proprietor: **B.V. METAALWARENFABRIEK "VENLO",
L.J. Costerstraat 30, NL-5916 PS Venlo(NL)**

(72) Inventor: **Holthuisen, Arnoldus Gerardus, Ariensweg 40,
NL-5912 JB Venlo(NL)**

(74) Representative: **van der Beek, George Frans et al,
Nederlandsch Octrooibureau Johan de Wittlaan 15 P.O.
Box 29720, NL-2502 LS The Hague(NL)**

## Description

The invention relates to a sanitary single-hole tap, intended for fixing to an opening of a washbasin, kitchen worktop or the like, provided with a tap body whose bottom edge when fixed rests in sealing fashion on the top surface of the washbasin, kitchen worktop or the like around the opening therein, at least one water feed pipe connected to the tap body, a bore in the tap body for taking a screw-threaded bolt which can be turned from the top side of the washbasin or the like using a tool, and a nut which fits on the screw-threaded bolt under the washbasin or the like to fix the tap body, the nut being formed in such a way that during turning of the screw-threaded bolt it is locked by the rigid feed pipe(s).

Such a tap in the form of a mixer tap is known from EP-A 0 113 444 and FR-A 2 525 296.

When this tap is being fixed, after insertion into the said opening, the nut is placed from the bottom side of the washbasin or the kitchen worktop on the end of the screw-threaded bolt, following which the nut can be clamped against the bottom wall of the opening by turning the screw-threaded bolt from the top side.

At an often difficultly accessible place the screw thread of the nut must be held straight on the screw thread of the screw-threaded bolt before the screw-threaded bolt can be tightened from the top. It is often difficult to prevent the nut from going crookedly onto the screw-threaded bolt, as a result of which the screw thread in the nut can be damaged.

The object of the invention is to produce a fixing arrangement which simplifies the fixing of a single-hole tap to a washbasin or kitchen worktop.

This is achieved according to the invention through the nut consisting of a part with a screw-threaded hole and a somewhat flexible upstanding part, and of two parallel arms, and through the screw-threaded bolt being provided with an essentially smooth end part.

Through the presence of the somewhat flexible upstanding part of the screw-threaded hole in the nut and the smooth end part of the screw-threaded bolt, the nut can be pressed upwards by hand, goes straight onto the screw-threaded bolt by itself, and does not fall back. The screw-threaded bolt can then be tightened without it being necessary to hold the nut with one's hand or with a tool.

The upstanding part is preferably formed by a collar running in line with the screw-threaded hole, provided with longitudinal slits, so that lips are formed.

The invention will be explained in greater detail with reference to the drawing, in which:

Fig. 1 is a longitudinal section of a tap body fixed in an opening in a washbasin or the like;

Fig. 2 is a bottom view of Fig. 1;

Fig. 3 is a top view of the nut according to the invention; and

Fig. 4 is a cross section along the line IV–IV of Fig. 3.

The part of the tap body which is important for the invention is indicated by 1, the connecting edge by 2, the centring edge by 3, the feed pipes for hot and cold water by 4 and 5, the screw-threaded bolt by 6, the nut by 7, the washbasin or the like by 8, and the opening therein by 9.

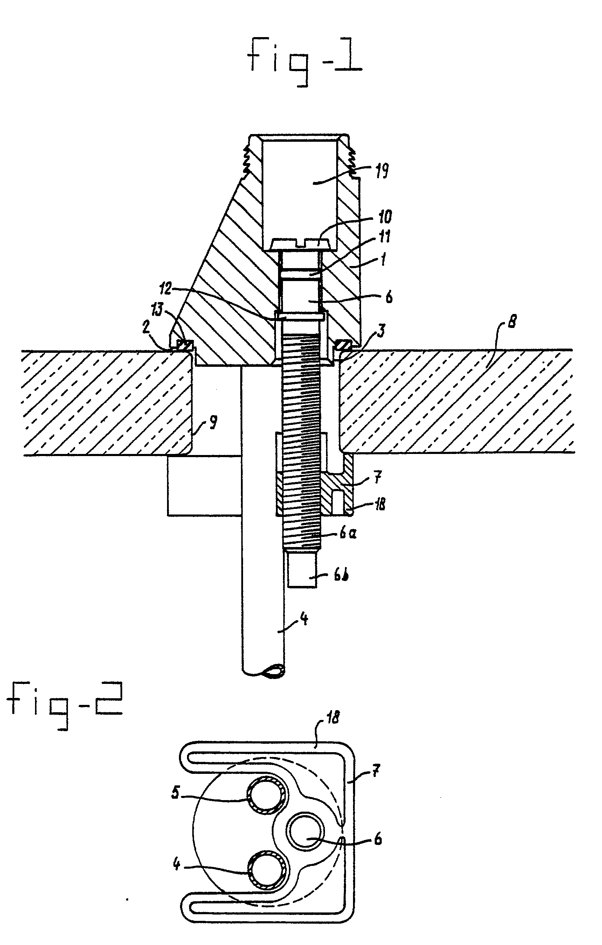

As can be seen from Fig. 1, the screw-threaded bolt 8 comprises a head 10, an indentation with sealing ring 11, and an indentation with a locking ring 12, for example in the form of a circlip.

The tap body 1 has in the connecting edge 2 another indentation with a sealing ring 13.

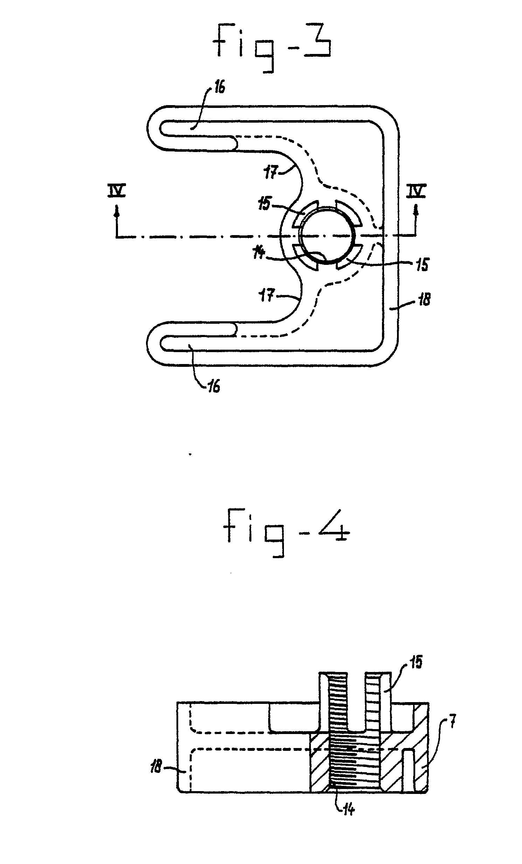

A preferred embodiment of the nut 7 is best seen from Figs. 2, 3 and 4.

The nut 7 is preferably made of plastics.

As can be seen from Fig. 1, the screw-threaded bolt 6 has not only a part with screw thread 6a, but also a smooth end part 6b.

The nut 7 has in top view an essentially U-shaped form with a cylindrical passage 14 with screw thread, with a number of cylindrical parts 15, for example four, which are in line therewith, and in which there are also screw thread parts.

The nut 7 also has two arms 16 with resting places 17 for the pipes 4 and 5.

The nut 7 can have a flanged edge 18 all the way round for reinforcement.

When the tap body 1 is fitted in an opening of a washbasin or kitchen worktop 8, the tap body 1 is inserted with the pipes 4 and 5 and the bolt 6 into the opening 9.

The nut 7 is then fitted from the bottom. The lips 15 are somewhat flexible here, so that the nut can be pressed in the axial direction onto the smooth part 6b and the beginning of the screw thread part 6a and then no longer falls back.

The bolt 6 can now be turned from the top with a screwdriver or the like, without the nut 7 needing to be held. Turning of the nut 7 is prevented by the pipes 4 and 5.

The bolt 6 runs through the hole 19 into the tap body 1, to which the water outlet (not shown) is subsequently connected. The bolt is therefore then no longer visible.

## Claims

1. Sanitary single-hole tap, intended for fixing to an opening (9) of a washbasin (8), kitchen worktop or the like, provided with a tap body (1) whose bottom edge when fixed rests in sealing fashion on the top surface of the washbasin (8), kitchen worktop or the like around the opening (9) therein, at least one water feed pipe (4, 5) connected to the tap body (1), a bore in the tap body for taking a screw-threaded bolt (6), which can be turned from the top side of the washbasin (8) or the like using a tool, and a nut (7) which fits on the screw-threaded bolt (6) under the washbasin (8) or the like to fix the tap body (1), the nut (7) being formed in such a way that during turning of the screw-threaded bolt (6) it is locked by the rigid feed pipe(s) (4, 5), characterized in that the nut consists of a part with a screw thread hole (14) and a somewhat flexible upstanding part (15), and of two parallel arms (18), and in that the screw-threaded bolt (6) is provided with an essentially smooth end part (6b).

2. Sanitary single-hole tap according to claim 1, characterized in that the upstanding part (15) is formed by a collar running in line with the screw thread hole (14), provided with longitudinal slits, so that lips are formed.

3. Sanitary single-hole tap according to claim 1 or 2, characterized in that the nut (7) is made of plastics.

4. Sanitary single-hole tap according to one or more of the preceding claims, characterized in that after mounting, the bolt (6) is concealed by the fastening of the water outlet.

**Patentansprüche**

1. Sanitäre Einlochbatterie zur Befestigung in einer Öffnung (9) eines Waschbeckens (8), einer Küchenarbeitsplatte od.dgl., mit einem Batteriekörper (1), dessen Bodenkante im montierten Zustand abdichtend auf der Oberfläche des Waschbeckens (8), der Küchenarbeitsplatte od.dgl. rund um die darin befindliche Öffnung (9) aufsitzt, und mit zumindest einem Wasserzuführrohr (4, 5), das mit dem Batteriekörper (1) verbunden ist, einer Bohrung in dem Batteriekörper zur Aufnahme eines Schraubbolzens (6) der von der Oberseite des Waschbeckens (8) od.dgl. mittels eines Werkzeugs gedreht werden kann, und einer Mutter (7), die unter dem Waschbecken (8) od.dgl. auf den Schraubbbolzen (6) paßt, um den Batteriekörper (1) zu befestigen, wobei die Mutter (7) so ausgebildet ist, daß sie während des Drehens des Schraubbolzens (6) durch das (die) steife(n) Wasserzuführrohr(e) (4, 5) blockiert ist, dadurch gekennzeichnet, daß die Mutter aus einem Teil mit einer Gewindebohrung (14) und einem etwas biegsamen, nach oben stehenden Teil (15) sowie aus zwei parallelen Armen (18) besteht, und daß der Schraubbolzen (6) mit einem im wesentlichen glatten Endstück (6b) versehen ist.

2. Sanitäre Einlochbatterie nach Anspruch 1, dadurch gekennzeichnet, daß der nach oben stehende Teil (15) durch einen Kragen gebildet wird, der fluchtend mit der Gewindebohrung (14) verläuft und mit länglichen Schlitzen versehen ist, so daß Lippen gebildet werden.

3. Sanitäre Einlochbatterie nach Anspruch 1, dadurch gekennzeichnet, daß die Mutter (7) aus Kunststoff besteht.

4. Sanitäre Einlochbatterie nach einem oder mehreren der vorhergehenden Ansprüche, dadurch gekennzeichnet, daß nach dem Montieren der Schraubbolzen (6) durch die Halterung des Wasserauslasses verdeckt ist.

**Revendications**

1. Robinet sanitaire à trou unique, destiné à être fixé à une ouverture (9) d'un lavabo (8), d'un plan de travail de cuisine ou analogue et muni d'un corps de robinet (1) dont le bord inférieur, lorsqu'il est fixé, repose de façon étanche à la face supérieure du lavabo (8), du plan de travail de cuisine ou analogue, autour de l'ouverture (9) ménagée dans celui-ci, d'au moins un tuyau d'amenée (4, 5) d'eau relié au corps de robinet (1), d'un trou dans le corps de robinet pour recevoir un boulon (6) qui peut être tourné par le dessus du lavabo (8) ou analogue au moyen d'un outil, et d'un écrou (7) qui se place sur le boulon (6) sous le lavabo (8) ou analogue pour fixer le corps de robinet (1), l'écrou (7) étant agencé de telle façon qu'il soit bloqué par le ou les tuyaux d'amenée rigides (4, 5) pendant que l'on tourne le boulon (6), caractérisé en ce que l'écrou comprend une partie munie d'un trou taraudé (14) et d'une partie droite (15) un peu flexible et deux bras parallèles (18) et en ce que le boulon (6) est muni d'une partie terminale (6b) pratiquement lisse.

2. Robinet sanitaire à trou unique selon la revendication 1, caractérisé en ce que la partie droite (15) est formée par un collier qui prolonge le trou taraudé (14) et qui est muni de fentes longitudinales, de sorte que des lèvres sont formées.

3. Robinet sanitaire à trou unique selon la revendication 1 ou 2, caractérisé en ce que l'écrou (7) est fait de matière plastique.

4. Robinet sanitaire à trou unique selon l'une ou plusieurs des revendications précédentes caractérisé en ce qu'après le montage, le boulon (6) est caché par la fixation de la sortie d'eau.

fig-1

fig-2

Fig-3

16

17

IV     IV

15

14

15

17

18

16

Fig-4

15

18

7

14